# EUROPÄISCHE PATENTSCHRIFT

(11) **EP 2 742 053 B1**
(45) Veröffentlichungstag und Bekanntmachung des Hinweises auf die Patenterteilung: **20.05.2015**
(21) Anmeldenummer: 12750729.1
(22) Anmeldetag: 09.08.2012
(51) Int. Cl.: C07F 7/08, C07F 7/18, C08L 21/00, C08K 5/54, B60C 1/00

(54) **VERNETZTE ORGANOSILIZIUM-POLYSULFIDE**
CROSS-LINKED ORGANOSILICON POLYSULFIDES
POLYSULFURE D'ORGANOSILICIUM RÉTICULÉS

(30) Priorität: 12.08.2011 EP 11177443
(43) Veröffentlichungstag der Anmeldung: 18.06.2014
(73) Patentinhaber: LANXESS Deutschland GmbH, 50569 Köln (DE)
(72) Erfinder: WEIDENHAUPT, Hermann-Josef, 50259 Pulheim (DE); WIEDEMEIER, Melanie, 41540 Dormagen (DE); FELDHUES, Ulrich, 51465 Bergisch Gladbach (DE)
(86) Internationale Anmeldenummer: PCT/EP2012/065560
(87) Internationale Veröffentlichungsnummer: WO 2013/023978

(56) Entgegenhaltungen:
- EP-A1- 0 748 839
- WO-A1-2006/102518

## Beschreibung

Die Erfindung betrifft neue vernetzte Organosilizium-polysulfide, Verfahren zu deren Herstellung und deren Verwendung als Additiv für Kunststoffe und/oder Kautschuke.

20 bis 25 Prozent des Treibstoffverbrauchs eines Pkw resultieren aus dem Rollwiderstand der Reifen, bei Lastkraftwagen sind es sogar rund 30 Prozent.

Diese Werte haben die EU-Kommission veranlasst, die Automobilindustrie per Verordnung zum Einsatz rollwiderstandsarmer Reifen zu verpflichten. Für Neuwagen tritt die Pflicht im Jahr 2011 in Kraft. Den weitaus größeren Teil des Marktes machen allerdings Reifen aus, die als Ersatz für alte und abgefahrene Pneus verwendet werden. Diese müssen ab 2012 hinsichtlich ihrer Kraftstoffeffizienz, Nasshaftung und Rollgeräusche gekennzeichnet werden. Ähnlich dem bereits von Haushaltsgeräten bekannten System sollen Klassen von A (beste Leistung) bis G (schlechteste Leistung) mehr Transparenz für den Verbraucher herbeiführen und als Entscheidungshilfe beim Kauf neuer Reifen dienen.

Spätestens seit sich die Europäische Union mit den Grenzwerten für den Kohlendioxidausstoß durch Pkws befasst, suchen die Automobilhersteller nach wirtschaftlichen Möglichkeiten, um die Zielmarke von höchstens 130 g/km CO₂-Emission zu erreichen. Wesentliche Bedeutung kommt dabei rollwiderstandsarmen Reifen zu. Sie leisten beim Abrollen weniger Verformungsarbeit und senken deshalb den Kraftstoffverbrauch.

Damit die Verminderung des Rollwiderstands nicht auf Kosten anderer wichtiger Eigenschaften geschieht, werden zugleich auch die Anforderungen an die Nasshaftung und das Rollgeräusch festgelegt. Einen ersten Hinweis auf Nassrutschverhalten und Rollwiderstand gibt der Verlustfaktor tan δ. Bei 0 °C sollte dieser möglichst hoch sein (gute Nassrutschfestigkeit), bei 60 bis 70 °C möglichst niedrig (Reduktion des Rollwiderstands).

Es besteht also ein großer Bedarf an verbesserten Kautschukmischungen, die beim Einsatz in der Reifenherstellung zu Produkten führen, die über verbesserte Eigenschaften, wie geringeren Rollwiderstand und Rollgeräusch und bessere Nasshaftung, verfügen.

Zur Herstellung von Reifen mit verringertem Rollwiderstand sind bereits eine Reihe von Lösungsvorschlägen ausgearbeitet worden. In DE-A 2 255 577, DE-A 4 435 311, EP-A 0670 347 sowie US-A 4 709 065 sind bestimmte polysulfidische Silane als Verstärkungsadditive für kieselsäurehaltige Kautschukvulkanisate beschrieben worden. Diese Verstärkungsadditive sind aber noch verbesserungsbedürftig. Nachteilig bei der Verwendung dieser bekannten Additive ist z.B. dass zur Erreichung einer akzeptablen Verarbeitbarkeit relativ große Mengen der teuren polysulfidischen Silane eingesetzt werden müssen.

Schwefelhaltige Organosiliziumverbindungen sind bereits aus dem Stand der Technik bekannt.

So werden beispielsweise in der EP-A 670347 und in der EP-A 748839 Schwefel- und Silizium-haltige Verbindungen als Verstärkungsadditiv in Kautschukmischungen beschrieben.

Aus der EP-A 864608 ist der Einsatz von polysulfidischen Polyethersilanen in Kautschukmischungen bekannt.

Die bekannten schwefelhaltigen Organosiliziumverbindungen werden als Verstärkungsadditive in Kautschukmischungen eingesetzt und sollen dazu dienen, die Eigenschaften der damit hergestellten Kautschukvulkanisate zu verbessern. In jüngster Zeit gingen die Bestrebungen vor allem dahin, Additive zu finden, die beim Einsatz in der Reifenherstellung zu Produkten führen, die über verbesserte Eigenschaften, wie geringeren Rollwiderstand, geringes Rollgeräusch und bessere Nasshaftung verfügen. Die derzeit bekannten Additive auf Basis von schwefelhaltigen Organosiliziumverbindungen sind in dieser Hinsicht allerdings noch verbesserungsbedürftig.

Aufgabe der vorliegenden Erfindung war es, ein neues, verbessertes Additiv für Kunststoffe und/oder Kautschuke bereit zu stellen, das insbesondere die Haftung, Vernetzung und Oberflächenbeschaffenheit der Kunststoffe und/oder Kautschuke positiv verändert.

Es wurden neue, vernetzte Organosilizium-polysulfide gefunden, die sich hervorragend als Additive für Kunststoffe und/oder Kautschuke, insbesondere als Haftvermittler, Vernetzungsmittel und Oberflächenmodifizierungsmittel eignen. Insbesondere beim Einsatz in kieselsäurehaltigen Kautschukmischungen führt der Einsatz der erfindungsgemäßen vernetzten Organosilizium-polysulfide als Verstärkungsadditive bei den daraus hergestellten Vulkanisaten zu verbesserten Eigenschaften, beispielsweise im Hinblick auf den Rollwiderstand von Autoreifen.

Gegenstand der vorliegenden Erfindung sind Verbindungen der Formel

R⁴R⁵R⁶Si - X³-(-S_{y}-Y-)ₘ - Sy -X⁴ -SiR⁷R⁸R⁹ (I)

worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 0 bis 20 steht
   und
R⁴, R⁵, R⁶, R⁷, R⁸ und R⁹ unabhängig voneinander für -OH, -OMetall, Alkyl, Alkoxy, Phenyl, Phenoxy stehen, und
mindestens einer der Substituenten R⁴, R⁵, R⁶, R⁷, R⁸ und R⁹ für einen Rest der Formel

-O-R⁵R⁶Si - X^{3'}-(-S_{y}-Y-)ₘ - Sy -X⁴ -SiR⁷R⁸R⁹ (Ia)

steht,
wobei die Substituenten und Indices der Formel (Ia) die oben für Formel (I) angegebene Bedeutung haben,
Metall für ein Metallion aus der Reihe der Alkali- und Erdalkalimetalle steht,
und gegebenenfalls die Reste der Formel (Ia) über eine oder mehrere -Si-O-Si-Einheiten mit weiteren Resten der Formel (Ia) verbunden sind.

Bevorzugt sind Verbindungen der Formel (I),
worin
X³ und X⁴ unabhängig von einander für C₁-C₆-Alkylen stehen,
Y für einen geradkettigen, verzweigten oder cyclischen C₄-C₁₈-Alkylenreste steht der gegebenenfalls mit C₆-C₁₂-Aryl-, C₁-C8-Alkoxy- oder Hydroxygruppen substituiert ist und der gegebenenfalls durch Sauerstoff-, Schwefel- oder Stickstoffatome oder durch C₆-C₁₂-Aryl unterbrochen ist, oder für eine zweiwertige, gegebenenfalls substituierte, gegebenenfalls Heteroatome enthaltende aliphatische, cycloaliphatische oder aromatische Gruppe steht,
y für eine ganze Zahl von 2 bis 4 steht,
m für eine ganze Zahl von 0 bis 6 steht
und
R⁴, R⁵, R⁶, R⁷, R⁸ und R⁹ unabhängig voneinander für -OH, -OMetall, oder, C₁-C₈-Alkoxy stehen,
und mindestens einer der Substituenten R⁴, R⁵, R⁶, R⁷, R⁸ und R⁹ für einen Rest der Formel

-O-R⁵R⁶Si - X³-(-S_{y}-Y-)ₘ - Sy -X⁴ -SiR⁷R⁸R⁹ (Ia)

steht, wobei die Substituenten und Indices in Formel (Ia) die oben für Formel (I) angegebene Bedeutung haben,
Metall für ein Metallion ausgewählt aus der Reihe Na, K, Mg/2 und Ca/2 steht,
und gegebenenfalls die Reste der Formel (Ia) über eine oder mehrere -Si-O-Si-Einheiten mit weiteren Resten der Formel (Ia) verbunden sind.

Besonders bevorzugt sind Verbindungen der oben angegebenen Formeln (I),
worin
X³ und X⁴ unabhängig von einander für C₂-C₃-Alkylen stehen,
Y für einen Rest der Formel 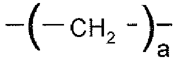 mit a = 2 -12
oder 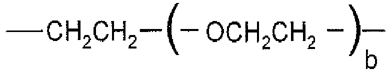 mit b = 1 - 4
steht,
y für eine ganze Zahl von 2 bis 4 steht,
m für 0, 1, 2, 3, 4, 5 oder 6 steht,
R⁴, R⁵, R⁶, R⁷, R⁸ und R⁹ unabhängig voneinander für -OH, -ONa, -OK, -O-(Mg/2), -O-(Ca/2), Methoxy oder Ethoxy stehen
und
mindestens einer der Substituenten R⁴, R⁵, R⁶, R⁷, R⁸ und R⁹ für einen Rest der Formel

-O-R⁵R⁶Si - X³-(-S_{y}-Y-)ₘ - Sy -X⁴ -SiR⁷R⁸R⁹ (Ia)

steht, worin die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind.

Ganz besonders bevorzugt sind Verbindungen der oben angegebenen Formel (I), worin
X³ und X⁴ unabhängig von einander für C₂-C₃-Alkylen stehen,
Y für -(CH₂)-₆ steht
y für 2, 3 oder 4 steht,
m für 1 steht,
R⁴, R⁵, R⁶, R⁷, R⁸ und R⁹ unabhängig voneinander für -OH, -ONa, Methoxy oder Ethoxy stehen und
mindestens einer der Substituenten R⁴, R⁵, R⁶, R⁷, R⁸ und R⁹ für einen Rest der Formel

-O-R⁵R⁶Si -- X³-(-S_{y}-Y-)ₘ - S_{y} -X⁴ -SiR⁷R⁸R⁹ (Ia)

steht, worin die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind.

Weiterhin ganz besonders bevorzugt sind Verbindungen der oben angegebenen Formel (I), worin
X³ und X⁴ unabhängig von einander für C₂-C₃-Alkylen stehen,
y für 2, 3 oder 4 steht,
m für 0 steht,
R⁴, R⁵, R⁶, R⁷, R⁸ und R⁹ unabhängig voneinander für -OH, -ONa, Methoxy oder Ethoxy stehen und
mindestens einer der Substituenten R⁴, R⁵, R⁶, R⁷, R⁸ und R⁹ für einen Rest der Formel

-O-R⁵R⁶Si-X³-(-S_{y}-Y-)ₘ-S_{y}-X⁴-SiR⁷R⁸R⁹ (Ia)

steht, worin die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind.

Die Verbindungen der Formel (I) liegen als vernetzte Strukturen vor. Bevorzugt handelt es sich bei den Verbindungen der Formel (I) um vernetzte Organosilizium-polysulfide, die über wenigstens eine Si-O-Si-Einheit verbunden sind. Vorzugsweise sind wenigstens 50 Prozent der enthaltenen Si-Atome über wenigstens eine Si-O-Si-Einheit verbunden. Bevorzugt sind mindestens 50 % der Si-Atome der Verbindungen der Formel (I) über mindestens eine -Si(OSi-)₂- und ganz besonders bevorzugt über mindestens eine -Si(OSi-)₃- Einheit vernetzt.

Die Verbindungen der Formel (I) enthalten im Allgemeinen
0 bis 100 Gew.-% an Struktureinheiten der Formel -Si(OSi)₃
0 bis 50 Gew.-% an Struktureinheiten der Formel -Si(OSi)₂(OR)₁
0 bis 50 Gew.-% an Struktureinheiten der Formel -Si(OSi)₁(OR)₂
0 bis 100 Gew.-% an Struktureinheiten der Formel -Si(OR)₃,
wobei R insbesondere für H, Methyl und/oder Ethyl steht und sich die Gew.-% auf 100 Prozent addieren.

Die nachfolgenden Strukturen sollen beispielhaft veranschaulichen, wie die Umgebung eines Si-Atoms in einem erfindungsgemäßen Organosilizium-polysulfid (hier fett-markiertes Siliciumatom) je nach Vernetzungsgrad aussehen kann, ohne die Erfindung darauf zu beschränken.

Veranschaulichung für eine Struktureinheit der Formel -Si(OR)₃ mit R = Ethyl:

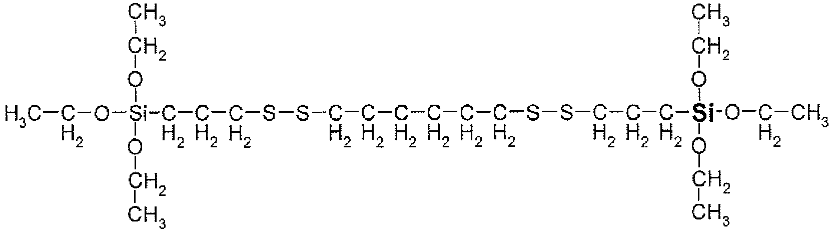

Veranschaulichung für eine Struktureinheit der Formel -Si(OSi)₁(OR)₂ mit R = Ethyl:

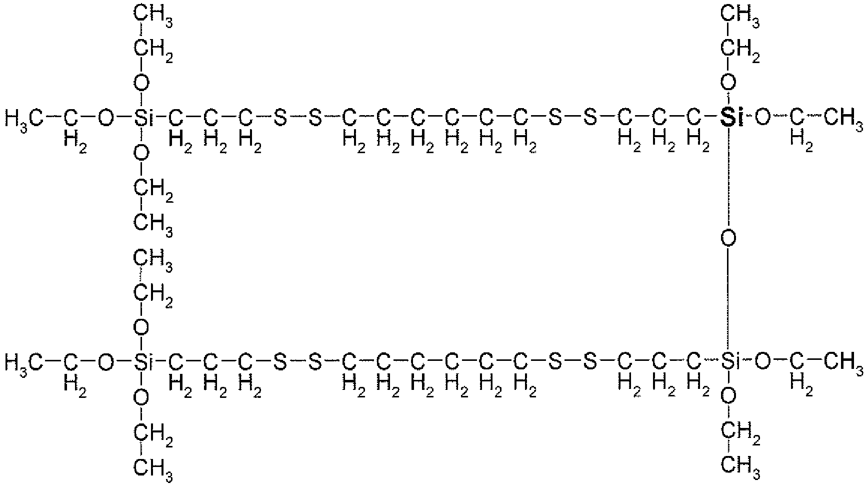

Veranschaulichung für eine Struktureinheit der Formel -Si(OSi)₂(OR)₁ mit R = Ethyl:

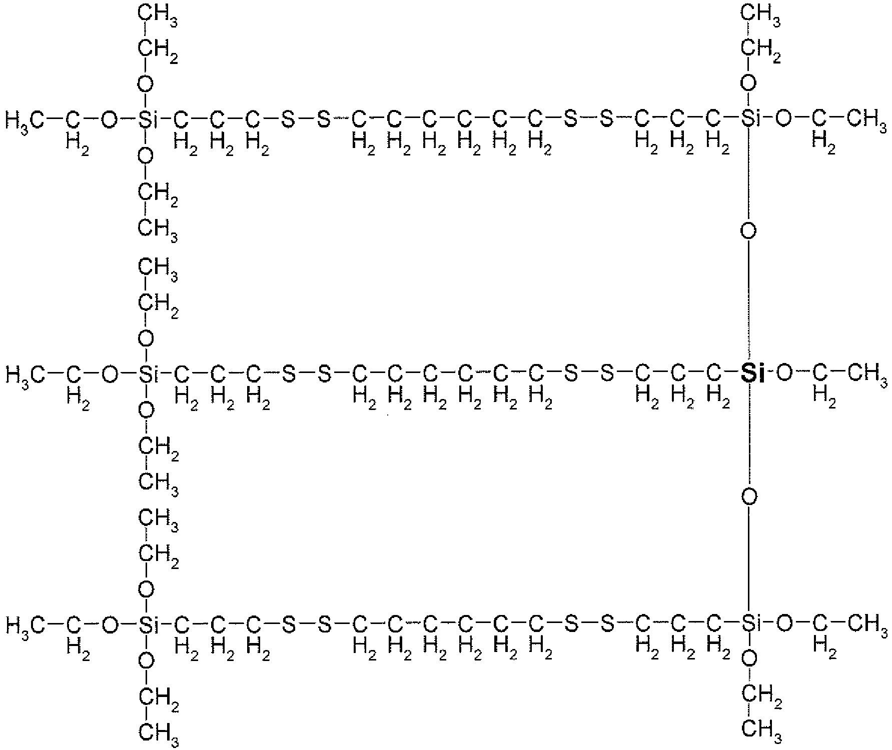

Veranschaulichung für eine Struktureinheit der Formel -Si(OSi)₃:

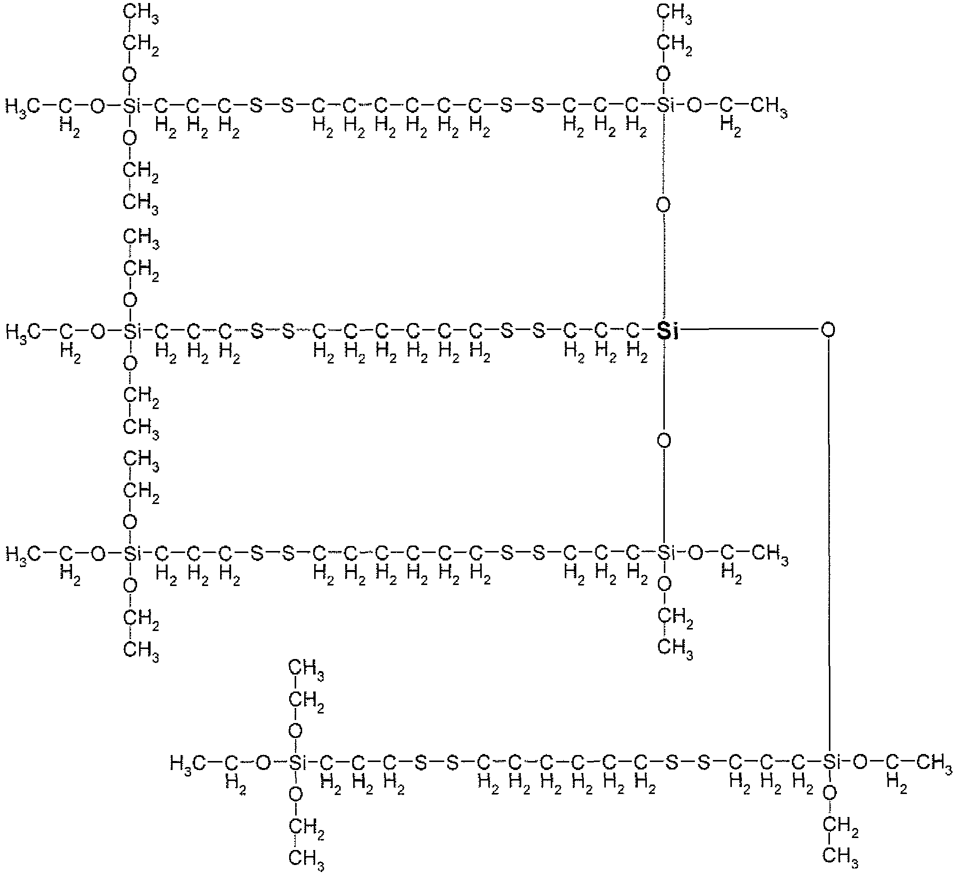

Die Verbindungen der Formel (I) enthalten bevorzugt
0 bis 100 Gew.-% an Struktureinheiten der Formel -Si(OSi)₃
0 bis 50 Gew.-% an Struktureinheiten der Formel -Si(OSi)₂(OR)₁
0 bis 30 Gew.-% an Struktureinheiten der Formel -Si(OSi)₁(OR)₂
0 bis 20 Gew.-% an Struktureinheiten der Formel -Si(OR)₃
wobei R insbesondere für H, Methyl und/oder Ethyl steht und sich die Gew.-% auf 100 Prozent addieren.

Die oben angegebenen Gewichtsprozente beziehen sich jeweils auf 100 Gew.-% an Verbindung der Formel (I).

Insbesondere bevorzugt sind Verbindungen der Formel (I), worin
X³ und X⁴ unabhängig von einander für C₂-C₃-Alkylen stehen,
Y für -(CH₂)-₆ steht,
y für eine ganze Zahl von 2 bis 4 steht,
m für 1 steht,
R⁴, R⁵, R⁶, R⁷, R⁸ und R⁹ unabhängig voneinander für -OH, -ONa, Methoxy oder Ethoxy steht,
und wenigstens einer, vorzugsweise mehrere der Reste R⁴, R⁵, R⁶, R⁷, R⁸ und R⁹ für einen Rest der Formel

-O-R⁵R⁶Si-X³-(-S_{y}-Y-)ₘ-S_{y}-X⁴-SiR⁷R⁸R⁹ (Ia)

steht,
worin die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind,
und die Verbindung der Formel (I)
0 bis 100 Gew.-%, vorzugsweise 40-90 Gew.-%, und insbesondere 50-80 Gew.-% an Struktureinheiten der Formel -Si(OSi)₃
0 bis 50 Gew.-%, vorzugsweise 10-40 Gew.-%, und insbesondere 10-30 Gew.-% an Struktureinheiten der Formel -Si(OSi)₂(OR)₁
0 bis 30 Gew.-%, vorzugsweise 0-20 Gew.-%, und insbesondere 5-15 Gew.-% an Struktureinheiten der Formel -Si(OSi)₁(OR)₂
0 bis 20 Gew.-%, vorzugsweise 0-10 Gew.-%, und insbesondere 0-5 Gew.-% an Struktureinheiten der Formel -Si(OR)₃,
wobei
R für H, Na, Methyl und/oder Ethyl steht,
aufweisen.

Es wurde nun gefunden, dass die erfindungsgemäßen vernetzten Organosilizium-polysulfide der Formel (I) sich hervorragend als Additive für Kunststoffe und/oder Kautschuke, insbesondere als Haftvermittler, Vernetzungsmittel und Oberflächenmodifizierungsmittel eignen.

Gegenstand der vorliegenden Erfindung ist auch die Verwendung der erfindungsgemäßen vernetzten Organosilizium-polysulfide der Formel (I) als Additive für Kunststoffe und/oder Kautschuke.

Es ist bekannt, dass die Verwendung von handelsüblichen, Alkoxysilan-Verbindungen als Kopplungsreagenz während und nach der Anbindung an den Füllstoff zur Freisetzung beträchtlicher Mengen an Alkohol führt. Da in der Regel Trimethoxy- und Triethoxy-substituierte Silane eingesetzt werden, werden die entsprechenden Alkohole, Methanol sowie Ethanol, in erheblichen Mengen freigesetzt. Auf den Einsatz von Methoxy- und Ethoxy-substituierten Silanen konnte aber aus technischer Sicht nicht verzichtet werden, da diese über eine hohe Reaktivität verfügen und somit schnell an die zu koppelnde/ zu vernetzende Oberfläche, z.B. den Füllstoff, anbinden können.

Die erfindungsgemäßen vernetzten Organosilizium-polysulfide der Formel (I) zeichnen sich durch eine niedrige Flüchtigkeit aus und setzen während der Anbindung an den Füllstoff keinen oder nur wenig Alkohol frei und weisen überraschenderweise trotz ihrer Vernetzung eine hohe Reaktivität gegenüber der zu koppelnden/vernetzenden Oberfläche auf.

Das erfindungsgemäße Additiv kann als Haftvermittler zwischen anorganischen Materialien, zum Beispiel Glasfasern, Metallen, oxidischen Füllstoffen, Kieselsäuren, und organischen Polymeren, zum Beispiel Duroplasten, Thermoplasten oder Elastomeren beziehungsweise als Vernetzungsmittel und Oberflächenmodifizierungsmittel verwendet werden.

Vorzugsweise eignen sich die erfindungsgemäßen Verbindungen der Formel (I) als Additive für Kautschuke, vorzugsweise gefüllte Kautschuke. Insbesondere Mischungen der erfindungsgemäßen vernetzten Organosilizium-polysulfide mit mindestens einer weiteren schwefelhaltigen Organosiliziumverbindung stellen ein hervorragendes Additiv für kieselsäurehaltige Kautschuke, wie sie z.B. für Autoreifen eingesetzt werden, dar.

Die Mischungen der erfindungsgemäßen vernetzten Organosilizium-polysulfide der Formel (I), worin der Index m für eine ganze Zahl von 1 bis 20 steht, mit mindestens einer weiteren schwefelhaltigen Organosiliziumverbindung sind neu und Gegenstand einer parallelen, zeitgleich beim Europäischen Patentamt eingereichten Patentanmeldung.

Die Mischungen der erfindungsgemäßen vernetzten Organosilizium-polysulfide der Formel (I), worin der Index m für 0 steht, mit mindestens einer weiteren schwefelhaltigen Organosiliziumverbindung sind neu und weiterer Gegenstand dieser Anmeldung.

Die erfindungsgemäßen Mischungen enthalten mindestens ein vernetztes Organosilizium-polysulfid der oben allgemein und bevorzugt angegebenen Formel (I) und mindestens eine Verbindung der Formel

R¹R²R³Si-X¹-Sₓ-X²-SiR¹R²R³ (II)

worin
R¹, R² und R³ unabhängig voneinander für Alkoxy, vorzugsweise für C₁-C₆-Alkoxy, insbesondere für Methoxy oder Ethoxy stehen,
X¹und X² unabhängig voneinander für Alkylen, vorzugsweise für C₁-C₆-Alkylen, insbesondere für C₂-C₃-Alkylen stehen,
   und
x für eine ganze Zahl von 1 bis 6, vorzugsweise von 1 bis 4, insbesondere von 2 bis 4 steht.

Insbesondere bevorzugt sind als Verbindungen der Formel (II) zu nennen:
Bis-(triethoxysilylpropyl)-tetrasulfan und .Bis-(triethoxysilylpropyl)-disulfan.

Die Verbindungen der Formel (II) und deren Verwendung als Kautschukadditiv sind bekannt vgl. z.B. DE-A-2 255577 und EP-A 1 000 968.

Gegenstand der vorliegenden Anmeldung sind Mischungen enthaltend mindestens ein Organosilizium-polysulfid der oben als allgemein und bevorzugt angegebenen Formel (I), worin der Index m für 0 steht, mit mindestens einer weiteren Organosiliziumverbindung der oben allgemein und bevorzugt angegebenen Formel (II).

Weiterer Gegenstand der vorliegenden Anmeldung sind Mischungen enthaltend mindestens ein vernetztes Organosilizium-polysulfid der oben allgemein und bevorzugt angegebenen Formel (I) und mindestens eine Verbindung der Formel (IIa): 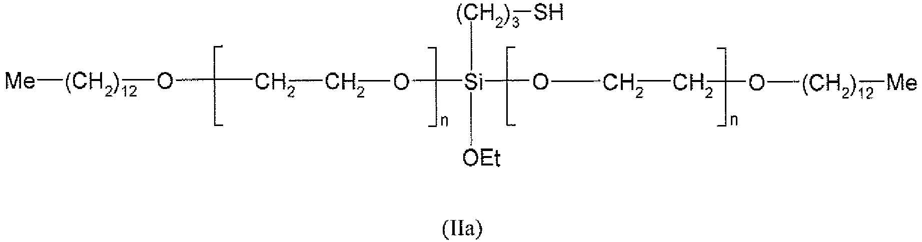 wobei n für eine Zahl von 4 bis 6 steht, vorzugsweise für 5 steht. Me ist ein Methyl- und Et ein Ethylrest.

Weiterer Gegenstand der vorliegenden Anmeldung sind Mischungen enthaltend mindestens ein vernetztes Organosilizium-polysulfid der oben allgemein und bevorzugt angegebenen Formel (I) und mindestens eine Verbindung der Formel (IIb):

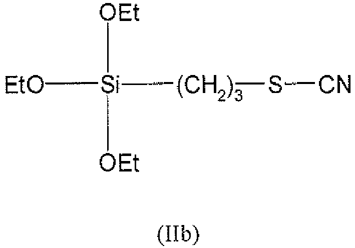

Überraschenderweise verleihen die erfindungsgemäßen vernetzten Organosilizium-polysulfide der Formel (I), insbesondere in Mischung mit den Verbindungen der Formel (II), (IIa) oder (IIb), als Additiv den damit hergestellten Vulkanisaten ein verbessertes dynamisches Verhalten, was sich z.B. in deutlich niedrigeren Werten für den Verlustfaktor tan δ (bei 60°C) bemerkbar macht. Der tan δ -Wert ist ein Indikator für den Rollwiderstand eines Reifens. Eine Reduzierung des tan δ - Wertes macht sich also in einer Verringerung des Rollwiderstandes z.B. eines Autoreifens bemerkbar.

Durch Verwendung der erfindungsgemäßen vernetzten Organosilizium-polysulfide der Formel (I), lassen sich daher umweltfreundlichere Reifen im Sinne der für 2012 geplanten Klassifizierung herstellen und somit das "Magische Dreieck" der Reifentechnologie optimieren. Durch Einsatz der erfindungsgemäßen Additive in Kautschuken lassen sich kostengünstig Reifen herstellen, die sich durch einen geringeren Laufwiderstand/Rollwiderstand in Kombination mit guter Naßrutschfestigkeit und langer Laufleistung auszeichnen.

Weiterhin zeichnen sich die erfindungsgemäßen vernetzten Organosilizium-polysulfide der Formel (I), dadurch aus, dass sie die Fließfähigkeit der damit hergestellten Kautschukmischungen nicht negativ beeinflussen.

Ein weiterer Gegenstand der vorliegenden Erfindung ist daher die Verwendung der erfindungsgemäßen vernetzten Organosilizium-polysulfide der Formel (I), gegebenenfalls in Mischung mit mindestens einer weiteren schwefelhaltigen Organosiliziumverbindung der Formel (II), (Ia) und/oder (IIb), als Additiv für Kautschuke, insbesondere für kieselsäurehaltige Kautschuke.

Dabei werden die erfindungsgemäßen Organosilizium-polysulfide oder erfindungsgemäßen Mischungen in einer an sich bekannten Weise mit den Bestandteilen der Kautschukmischung vermischt.

Die erfindungsgemäßen Additive/ Mischungen werden der Kautschukmischung in einer Menge von vorzugsweise je 0,1 bis 15 Gewichtsprozent, insbesondere von 0,3 bis 7 Gewichtsprozent bezogen auf den Kautschuk zugesetzt.

Weiterer Gegenstand der vorliegenden Erfindung sind kieselsäurehaltige Kautschukmischungen enthaltend ein erfindungsgemäßes Additiv. Die erfindungsgemäßen Kautschukmischungen enthalten mindestens einen Kautschuk, einen Vernetzer, einen Füllstoff sowie gegebenenfalls weitere Kautschukhilfsprodukte.

Die erfindungsgemäßen Kautschukmischungen lassen sich in bekannter Weise herstellen, indem man die einzelnen Bestandteile miteinander mischt (z.B. über einen Innenmischer, Walze, Extruder).

Bevorzugt enthält die erfindungsgemäße kieselsäurehaltige Kautschukmischung mindestens einen SBR-Kautschuk und mindestens einen BR-Kautschuk.

Vorzugsweise weist sie mindestens einen SBR-Kautschuk und mindestens einen BR-Kautschuk im Gewichts-Verhältnis SBR:BR= 60:40 bis 90:10 auf.

Zusätzlich kann die kieselsäurehaltige Kautschukmischung mindestens einen NR-Kautschuk enthalten.

Bevorzugt weist sie wenigstens einen SBR-Kautschuk und wenigstens einen BR-Kautschuk und wenigstens einen NR-Kautschuk im Verhältnis mindestens 60 und maximal 85 Gewichtsprozente SBR bezogen auf Kautschuk und mindestens 10 und maximal 35 Gewichtsprozente BR bezogen auf Kautschuk und mindestens 5 und maximal 20 Gewichtsprozente NR bezogen auf Kautschuk auf.

Für die Herstellung der erfindungsgemäßen Kautschukmischungen und der erfindungsgemäßen Kautschukvulkanisate eignen sich neben Naturkautschuk auch Synthesekautschuke. Bevorzugte Synthesekautschuke sind beispielsweise bei W. Hofmann, Kautschuktechnologie, Genter-Verlag, Stuttgart 1980, beschreiben.

Sie umfassen u.a.
- BR-: Polybutadien
- ABR-: Butadien/Acrylsäure-C1-C4-alkylester-Copolymerisat
- CR-: Polychloropren
- IR-: Polyisopren
- SBR-: Styrol/Butadien-Copolymerisate mit Styrolgehalten von 1 - 60, vorzugsweise 20-50 Gew.-%
- IIR-: Isobutylen/Isopren-Copolymerisate
- NBR-: Butadien(Acrylnitril-Copolymerisate mit Acrylnitrilgehalten von 5-60, vorzugsweise 10-50 Gew.-%
- HNBR-: teilhydrierter oder vollständig hydrierter NBR-Kautschuk
- EPDM-: Ethylen/Propyien/Dien-Copolymerisate
sowie Mischungen dieser Kautschuke.

Die erfindungsgemäßen kieselsäurehaltigen Kautschukmischungen enthalten im Allgemeinen 0,1 bis 15 Gewichtsteile an erfindungsgemäßem Additiv bezogen auf 100 Gewichtsteile eingesetzten Kautschuk. Bevorzugt enthalten die erfindungsgemäßen Kautschukmischungen 0,3 bis 13, insbesondere 0,3 bis 7 Gewichtsteile an erfindungsgemäßem Additiv bezogen auf 100 Gewichtsteile eingesetzten Kautschuk.

Die erfindungsgemäßen Kautschukmischungen können organische und/oder anorganische Füllstoffe enthalten, beispielsweise solche aus der Gruppe der oxidischen, der silikatischen Füllstoffe und Ruße, wobei die Füllstoffe im allgemeinen im Bereich von 50 bis 200 Gewichtsteile, vorzugsweise 60 bis 120 Gewichtsteile, bezogen auf 100 Gewichtsteile an eingesetzten Kautschuken verwandt werden.

Bevorzugt enthalten die erfindungsgemäßen Kautschukmischungen wenigstens einen Füllstoff ausgewählt wird aus der Gruppe gefällter Kieselsäuren und/oder Silikate mit einer spezifischen Oberfläche von 20 bis 400 m²/g, vorzugsweise mit einer spezifischen Oberfläche von 100 bis 200 m²/g.

Das erfindungsgemäße Additiv hat die Wirkung eines Verstärkungsadditivs. So zeichnen sich bevorzugte erfindungsgemäße Kautschukmischungen beispielsweise dadurch aus, dass ein daraus bei 170°C/t95 geheiztes Vulkanisat einen Verlustfaktor tan δ bei 60°C von < 0,2, insbesondere von < 0,145, und gleichzeitig eine Härte Shore A bei 23°C von > 65 aufweist und weiterhin einen Modul 300-Wert von > 12 MPa, vorzugsweise > 15 MPa aufweist.

Bevorzugte erfindungsgemäße Kautschukmischungen zeichnen sich weiterhin dadurch aus, dass ein daraus bei 170°C/t95 geheiztes Vulkanisat einen Verlustfaktor tan δ bei 60°C von kleiner 0,145 und gleichzeitig, eine Anvulkanisationszeit von größer 500 Sekunden zeigt.

Bevorzugte erfindungsgemäße Kautschukmischungen zeichnen sich weiterhin dadurch aus, dass ein daraus bei 170°C/t95 geheiztes Vulkanisat einen Verlustfaktor tan δ bei 60°C von kleiner 0,145 und gleichzeitig, eine Ausvulkanisationszeit von kleiner 2000 Sekunden zeigt.

Bei bevorzugten erfindungsgemäßen Kautschukmischungen liegt die Mischungsviskosität ML 1+4 bei 100°C im Allgemeinen bei kleiner 150, besonders bevorzugt bei kleiner 100.

Ein weiterer Gegenstand der vorliegenden Erfindung sind Kautschukvulkanisate, die sich aus den erfindungsgemäßen Kautschukmischungen herstellen lassen.

Ein weiterer Gegenstand der vorliegenden Erfindung ist ein Verfahren zur Herstellung von gefüllten Kautschukvulkanisaten, das dadurch gekennzeichnet ist, dass man
i) mindestens einem Kautschuk mit
ii) 10 - 150, vorzugsweise 30 - 120 Gew.-%, bezogen auf Kautschuk (i), Füllstoff und
iii) je 0,1 - 15, vorzugsweise je 0,3 - 7 Gew.-%, bezogen auf Kautschuk (i), Organosilizium-polysulfid Additive der Formel (I) und gegebenenfalls der Formeln (II), (IIa) und/oder (IIb)
bei Massetemperaturen von mindestens 120°C und bei Scherraten von 1 - 1000 sec (exp.-1), bevorzugt 1 - 100 sec (exp.-1), mischt und anschließend nach Zugabe weiterer Vulkanisationschemikalien in üblicher Weise vulkanisiert.

Die Zugabe des erfindungsgemäßen Additivs/ Mischung sowie die Zugabe von gegebenenfalls weiteren Hilfsprodukten erfolgt bevorzugt im ersten Teil des Mischprozesses bei Massetemperaturen von 100 - 200 °C bei den erwähnten Scherraten, sie kann jedoch auch später bei tieferen Temperaturen (40 - 100°C) z.B. zusammen mit Schwefel und Beschleuniger erfolgen. Dabei kann das erfindungsgemäße Additiv direkt als Mischung der Komponenten der Formeln (I) und (II), (IIa) und/oder (IIb) oder in Form der einzelnen Komponenten zugegeben werden.

Das erfindungsgemäße Additiv oder dessen einzelne Komponenten kann dabei sowohl in reiner Form als auch aufgezogen auf inerten, organischen oder anorganischen Trägern dem Mischprozeß zugeben werden. Bevorzugte Trägermaterialien sind Kieselsäure, natürliche oder synthetische Silikate, Aluminiumoxid und/oder Russe.

Als kieselsäurehaltige Füllstoffe im Sinne dieser Erfindung kommen für die erfindungsgemäßen Kautschukmischung und Kautschukvulkanisate folgende Füllstoffe in Frage:
- hochdisperse Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- Synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- Natürliche Silikate, wie Kaolin und andere natürliche vorkommende Kieselsäuren,
- Glasfasern und Glasfaserprodukte (Matten, Stränge) oder Mikroglaskugeln.

Als weitere Füllstoffe können Russe verwendet werden. Die hierbei zu verwendenden Russe sind z.B. nach dem Flammruß, Furnace- oder Gasruß-Verfahren hergestellt und besitzen BET-Oberflächen von 20 - 200 m²/g, wie SAF-, ISAF-, IISAF-, HAF-, FEF-, oder GPF-Ruße.

Das erfindungsgemäße Additiv wird bevorzugt in Mengen von 0,1 bis 15 % bezogen auf Kautschuk, in den erfindungsgemäßen Kautschukmischungen eingesetzt.

Eine besonders bevorzugte Variante besteht in der Kombination von Kieselsäure, Ruß und Additive der Formel (I). Bei dieser Kombination kann das Verhältnis von Kieselsäure zu Ruß in beliebigen Grenzen variiert werden. Aus reifentechnischer Sicht werden Kieselsäure:Ruß-Verhältnis von 20:1 bis 1,5:1 bevorzugt.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Gummiindustrie bekannt sind.

Die Kautschukhilfsprodukte werden in üblicher Menge, die sich u.a. nach dem Verwendungszweck der Vulkanisate richten, eingesetzt. Übliche Mengen sind 0,1 bis 30 Gew.-%, bezogen auf Kautschuk.

Als Vernetzungsmittel werden eingesetzt Peroxide, Schwefel, Magnesiumoxid, Zinkoxid, denen noch die bekannten Vulkanisationsbeschleuniger, wie Merkaptobenzothiazole, -sulfenamide, Thiurame, Thiocarbamate, Guanidine, Xanthogenate und Thiophosphate zugesetzt werden können. Bevorzugt ist Schwefel.

Die Vernetzungsmittel und Vulkanisationsbeschleuniger werden üblicherweise in Mengen von ca. 0,1 bis 10 Gew.-%, bevorzugt 0,1 bis 5 Gew.-%, bezogen auf Kautschuk, eingesetzt.

Wie bereits oben erwähnt, ist es gegen die Einwirkung von Wärme und Sauerstoff vorteilhaft Alterungsschutzmittel der Kautschukmischung hinzuzugeben. Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden üblicherweise auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD) sind.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden.

Die Ozonbeständigkeit kann durch dem Fachmann bekannte Antioxidantien verbessert werden wie beispielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die Vernetzung der Kautschukmischung kann sowohl mit Schwefel-Beschleuniger Systemen als auch mit Peroxiden erfolgen.

Als Vernetzer kommen z.B. peroxidische Vernetzer in Frage wie Bis(2,4-dichlorbenzoyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)buten, 4,4-Di-tert-butyl peroxynonylvalerat, Dicumylperoxid, 2,5-Dimethyl-2,5-di(tert-butylperoxy)hexan, tert-Butylcumylperoxid, 1,3-Bis(t-butyl-peroxyisopropyl) benzol, Di-tert-butylperoxid und 2,5-Dimethyl-2,5-di(tert-butylperoxy)hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropantrimethacrylat, Zndiacrylat, Zn-dimethacrylat, 1,2-Polybutadien oder N,N'-m-Phenylendimaleinimid geeignet.

Als Vernetzer kann auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Kautschukmischung ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Ebenso als Zusätze geeignet sind beispielsweise: Zinkdiamindiisocyanat, Hexamethylentetramin, 1,3-Bis(citraconimidomethyl)benzol sowie zyklische Disulfane.

In der erfindungsgemäßen Kautschukmischung wird das Schwefel-Beschleuniger-System bevorzugt.

Um die Entflammbarkeit zu vermindern und die Rauchentwicklung beim Verbrennen zu verringern, kann die erfindungsgemäße Kautschukmischungszusammensetzung auch Flammschutzmittel enthalten. Als Flammschutzmittel werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Das Kautschukvulkanisat kann auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1-bis C10-Alkoholen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymethylmethacrylat, Methyl-methacrylat-ButylacrylatCopolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere.

Das erfindungsgemäße Kautschukvulkanisat kann beispielsweise Herstellung von Schaumstoffen. verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitrosopentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation kann beispielsweise bei Temperaturen von 100 - 200°C, vorzugsweise 130 - 180°C, gegebenenfalls unter einem Druck von 10- 200 bar erfolgen.

Die Abmischungen des Kautschuks mit dem Füllstoff und den erfindungsgemäßen Additiven kann in üblichen Mischaggregaten, wie Walzen, Innenmischer und Mischextruder, durchgeführt werden.

Die erfindungsgemäßen Kautschukvulkanisate eignen sich zur Herstellung von Formkörpern mit verbesserten Eigenschaften, z.B. für die Herstellung von Kabelmäntel, Schläuchen, Treibriemen, Förderbändern, Walzenbelägen, Reifen, Schuhsohlen, Dichtungsringe und Dämpfungselemente.

Ebenfalls Gegenstand der vorliegenden Erfindung ist ein neues Verfahren zur Herstellung der erfndungsgemäßen, vernetzten Organosilizium-polysulfide der Formel (I).

Generell können Schwefel- und/oder Silizium-haltige Verbindungen auf verschiedene Weise hergestellt werden. In der Industrie werden Silane stets mit Lösungsmitteln und Katalysatoren unter Ausschluss von Wasser hergestellt. Stand der Technik ist es, Lösungsmittel wie Methanol, Ethanol, Propanol, Butanol einzusetzen, die nach der Reaktion wieder entfernt werden. Es ist bislang aus dem heutigen Stand der Technik dem Fachmann nicht bekannt, Silane im wässrigen Medium herzustellen.

Aus der EP-A 0 670 347 ist bekannt, dass Schwefel- und Silizium-haltige Verstärkungsadditive, die zwischen dem Silizium und Schwefel eine Alkylen-Gruppe enthalten, durch Umsetzung von Mercaptogruppen-haltigen Silanen und Di- und/oder Polymercaptanen mit Schwefeldichlorid oder Di-Schwefeldichlorid unter Abspaltung von HCl, hergestellt werden können. Diese Reaktion wird in Gegenwart von Lösungsmitteln, wie Alkoholen oder aromatischen Kohlenwasserstoffen, durchgeführt.

Aus GB-A 1 102 251 ist die Umsetzung von wasserfreien Alkalihydrogensulfiden mit Halogenalkyl)alkoxysilanen in methanolischem Medium zu den entsprechenden (Mercaptoalkyl)alkoxysilanen bei Normaldruck bekannt bzw. aus EP-A 0 471164 durch Umsetzung mit wasserfreiem Alkalihydrogensulfid.

Überraschenderweise wurde ein neues Verfahren zur Herstellung von Organosilizium-polysulfiden gefunden, das in wässrigem Medium durchgeführt wird.

Gegenstand der vorliegenden Erfindung ist ein Verfahren zur Herstellung von Organosiliziumpolysulfiden der Formel (I)

R⁴R⁵R⁶Si -X³-(-S_{y}-Y-)ₘS_{y}-X⁴-SiR⁷R⁸R⁹ (I)

worin die Substituenten und Indices die oben für Formel (I) als allgemein und bevorzugt angegebenen Bedeutungen haben, jedoch der Index m für eine ganze Zahl von 1 bis 20 steht,
das dadurch gekennzeichnet ist, dass
mindestens eine Verbindung der Formel (III)

R⁴R⁵R⁶Si-X³-SH (III)

worin
X³ für Alkylen steht,
R⁴, R⁵ und R⁶ unabhängig voneinander für -OH, -OMetall, Alkyl, Alkoxy, Phenyl, Phenoxy stehen,
wobei Metall für ein Metallion aus der Reihe der Alkali- und Erdalkalimetalle steht,
und mindestens eine Verbindung der Formel (IV)

R⁷R⁸R⁹Si - X⁴-SH (IV)

worin
R⁷, R⁸ und R⁹ unabhängig voneinander für -OH, -OMetall, Alkyl, Alkoxy, Phenyl, Phenoxy stehen, und wobei Metall für ein Metallion aus der Reihe der Alkali- und Erdalkalimetalle steht, und
X⁴ für Alkylen steht,
mit mindestens einer Verbindung der Formel (V)

Metall-O₃S-S Y - S-SO₃-Metall (V)

worin
Metall für ein Metallion aus der Reihe der Alkali- und Erdalkalimetalle steht,
und
Y für eine zweiwertige, gegebenenfalls substituierte, gegebenenfalls Heteroatome enthaltende aliphatische, cycloaliphatische oder aromatische Gruppe steht,
im wässrigen oder wässrig-organischen Medium umgesetzt wird.

Die Substituenten X³, X⁴ , R⁴, R⁵, R⁶, R⁷, R⁸ und R⁹, Y und Metall in den Formeln (III), (IV) und (V) haben bevorzugt und besonders bevorzugt die gleichen Bedeutungen wie für diese Substituenten und Metall in Formel (I) als bevorzugt und besonders bevorzugt angegeben.

Das erfindungsgemäße Verfahren wird im Allgemeinen bei einer Temperatur von 0 bis 100 Grad Celsius durchgeführt, ggf. kann die Reaktion auch bei Temperaturen oberhalb 100 Grad Celsius unter Druck erfolgen. Vorzugsweise erfolgt die Umsetzung der Edukte der Formeln (III), (IV) und (V) in Gegenwart eines Aldehyds und/oder Ketons, insbesondere in Gegenwart von Formaldehyd und/oder Acetaldehyd und/oder Aceton und/oder Methylethylketon, besonders bevorzugt in Gegenwart von Formaldehyd im wässrigen oder wässrig-organischen Medium. Vorzugweise erfolgt die Umsetzung unter Inertgas. Vorzugsweise erfolgt die Reaktion bei einem pH-Wert von 5 bis 10.

Der Grad der Vernetzung kann insbesondere durch die Reaktionsparameter Temperatur, pH-Wert, Konzentration der Edukte der Formeln (III), (IV) und (V) im Reaktionsgemisch und die Dauer der Umsetzung eingestellt werden. So führen insbesondere höhere Temperaturen und längere Umsetzungszeiten zu einer stärkeren Vernetzung, das heißt der Si(OSi)₃-Anteil nimmt zu. Der Grad der Vernetzung kann durch Probenentnahme während der Umsetzung und deren ²⁹Si -NMR spektroskopische Untersuchung kontrolliert werden. Wenn der gewünschte Vernetzungsgrad erreicht ist kann die weitere Vernetzung abgebrochen werden indem man das Reaktionsprodukt durch Filtration isoliert.

Vorteilhafterweise wird das Produkt der Formel (I) als Feststoff isoliert und mit Wasser Elektrolytfrei (< 500 µS) gewaschen.

Unvernetzte Organosilizium-polysulfide die der Formel (I) entsprechen, allerdings ohne die Vernetzung über die Substituenten der Formel (Ia) und worin der Index m für 0 steht, sind bereits aus dem Stand der Technik bekannt und können auf bekanntem Weg hergestellt werden. Aus diesen bekannten unvernetzten Verbindungen lassen sich die erfindungsgemäßen Organosilizium-polysulfide der Formel (I), worin die Substituenten und Indices die für diese Formel allgemein und bevorzugt angegebene Bedeutung haben, und der Index m für 0 steht, herstellen, indem man die entsprechenden unvernetzten Verbindungen im wässrigen oder wässrig-organischen Medium miteinander umsetzt. Diese Umsetzung kann bei einer Temperatur von 0 bis 100 Grad Celsius oder auch bei Temperaturen oberhalb 100 Grad Celsius unter Druck erfolgen.

Der Grad der Vernetzung kann insbesondere durch die Reaktionsparameter Temperatur, pH-Wert, Konzentration der unvernetzten Edukte der Formel (I) im Reaktionsgemisch und die Dauer der Umsetzung eingestellt werden. So führen insbesondere höhere Temperaturen und längere Umsetzungszeiten zu einer stärkeren Vernetzung, das heißt der Si(OSi)₃-Anteil nimmt zu. Der Grad der Vernetzung kann durch Probenentnahme während der Umsetzung und deren ²⁹Si -NMR spektroskopische Untersuchung kontrolliert werden. Wenn der gewünschte Vernetzungsgrad erreicht ist kann die weitere Vernetzung abgebrochen werden indem man das Reaktionsprodukt durch Filtration isoliert.

Vorteilhafterweise wird das Produkt der Formel (I) als Feststoff isoliert und mit Wasser Elektrolytfrei (< 500 µS) gewaschen.

Im Folgenden soll die vorliegenden Erfindung durch Beispiele erläutert werden, ohne diese jedoch darauf zu beschränken.

### Beispiel 1:

### Herstellung eines erfindungsgemäßen Organosilizium-polysulfids

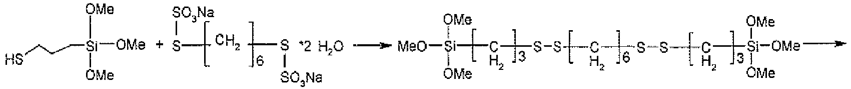

### teilhydrolysiertes, über Si-O-Si-Einheiten vernetztes Produkt.

| | | |
|---|---|---|
| Apparatur: | 2000ml Vierhalskolben mit Thermometer, Tropftrichter mit Druckausgleich, Rückflusskühler mit Gasableitungsansatz (Blasenzähler) und Schlauch, Rührwerk mit 250 Upm, pH-Meter | |
| Vorlage: | 99,1 g = 0,25 mol | Duralink^{®} HTS (98,48%; CAS-Nr.: 5719-73-3)-800 ml |
| | vollentsalztes Wasser | |
| | 41,1 g = 0,5 mol | Formaldehydlösung, 36,5 %ig |
| | 42 g = 0,5 mol | Natriumhydrogencarbonat |
| | 50 ml | Toluol (p.A.) |
| | | |
| Zulauf: | 103,3 g = 0,5 mol | 3-Mercaptopropyltrimethoxysilan (≥95%) |

In die mit Stickstoff gespülte Apparatur wurden Duralink^{®} HTS und Wasser vorgelegt. Der Rührer wurde eingeschaltet, dann wurden erst Natriumhydrogencarbonat danach Formaldehyd und anschließend das Toluol zugegeben.

Nun wurde bei einer Reaktionstemperatur von 20 bis 25°C das 3-Mercaptopropyltrimethoxysilan unter Stickstoffüberleitung innerhalb von ca. 30 Minuten zugetropft. Nach beendeter Dosierung wurde 22 Stunden bei 20 bis 25 °C nachgerührt und der Feststoff anschließend mittels D4-Fritte abgesaugt. Danach wurde das Produkt 6 mal mit je 500 ml vollentsalztem Wasser gewaschen. Das Produkt wurde anschließend bei 25°C im Vakuumtrockenschrank bis zur Gewichtskonstanz getrocknet.
Ausbeute: 122g

Bei dem erhaltenen erfindungsgemäßen Produkt handelt es sich um ein teilvernetztes Organosilizium-polysulfid. Die Bestimmung der Struktur des erhaltenen Produktes erfolgte mittels ²⁹Si-Festkörper-NMR Untersuchung. Aus der nachfolgenden Tabelle 1 lassen sich die Signalzuordnung und Auswertung des Stoffmengenanteils/Grad der Vernetzung ablesen.

**Tabelle 1: Signalzuordnung und Auswertung des Stoffmengenanteils des Beispiels 1**

| Signallage / ppm | Zuordnung | Stoffmengenanteil / % |
|---|---|---|
| -67,6 | R-Si-(OSi)₃ | 67 |
| -58,8 | R-Si-(OSi)₂(OH/OMe) | 22 |
| -50,5 | R-Si-(OSi)₁(OH/OMe)₂ | 8 |
| -42,3 | R-Si-(OH/OMe)₃ | 3 |

| | | |
|---|---|---|
| *Stoffanteil mit einem relativen Fehler von ± 10 Prozent behaftet. | | |

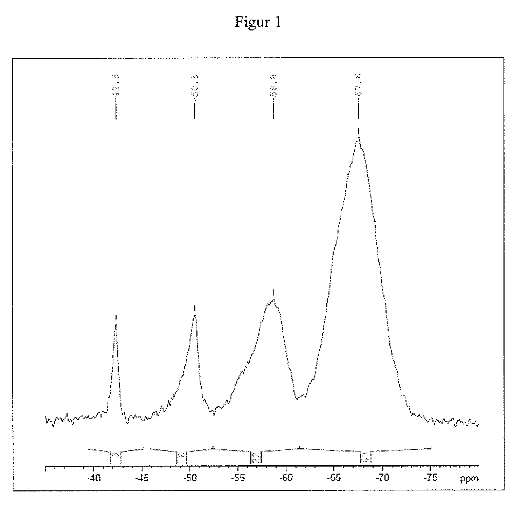

Figur 1 zeigt ein ²⁹Si -Festkörper NMR Spektrum des erfindungsgemäßen Organosiliziumpolysulfids gemäß Beispiels 1, gemessen unter quantitativen Bedingungen (direkte Anregung der ²⁹Si Kerne, Relaxationsdelay von 60 s) unter Probenrotation am magischen Winkel von 10 kHz.

Die ²⁹Si-Festkörper-NMR Spektren wurden protonenentkoppelt unter direkter Anregung der ²⁹Si-Kerne aufgenommen. Die Messung wurde unter MAS (magic-angle spinning) mit einer Rotationsfrequenz von 10 kHz durchgeführt. Aufgrund der Signal-lage konnten die Signale im ²⁹Si Spektrum (Abbildung 1) zugeordnet werden. Durch direkte Anregung der ²⁹Si -Kerne und einem verlängertem Recycledelay von 60 s können aus den Integralen der Signale die relativen Stoffmengenanteile der Siliziumatome bestimmt werden.

### Anwendungstechnische Ergebnisse:

Für die Prüfungen wurden folgende Kautschuk-Rezepturen gewählt, die in Tabelle 1 aufgeführt sind. Alle Zahlenangaben, sofern nichts anderes vermerkt, beziehen sich auf "parts per hundred rubber" (phr).

In einem 1,5L Innenmischer (70UpM), Starttemperatur 80°C, Mischzeit: 5 Minuten, wurden die nachfolgenden Kautschukmischungen hergestellt. Schwefel und Beschleuniger wurden zum Schluss auf einer Walze (Temperatur: 50°C) zugemischt.

**Tabelle 1: Kautschuk-Rezeptur**

| | **Referenz** | **Beispiel 1** |
|---|---|---|
| BUNA CB 24 (ölverstreckter Kautschuk der LANXESS Deutschland GmbH | 30 | 30 |
| BUNA VSL 5025-1 (LANXESS Deutschland GmbH) | 96 | 96 |
| CORAX N 339 (handelsüblicher Russ) | 6,4 | 6,4 |
| VULKASIL S (gefällte Kieselsäure der LANXESS Deutschland GmbH) | 80 | 80 |
| TUDALEN 1849-1 (Mineralöl) | 8 | 8 |
| EDENOR C 18 98-100 | 1 | 1 |
| VULKANOX 4020/LG | 1 | 1 |
| VULKANOX HS/LG | 1 | 1 |
| ZINKWEISS ROTSIEGEL | 2,5 | 2,5 |
| ANTILUX 654 | 1,5 | 1,5 |
| Si^{®} 69 (Additiv für Formel (II)) | 6,4 | 6,4 |
| VULKACIT D/C | 2 | 2 |
| VULKACIT CZ/C | 1,5 | 1,5 |
| MAHLSCHWEFEL 90/95 CHANCEL | 1,5 | 1,5 |
| Beispiel 1 (Additiv für Formel (I)) | | 1,0 |

**Tabelle 2: Zusammenstellung der Ergebnisse**

| **Parameter** | **Einheit** | **DIN** | **Referenz** | **Beispiel 1** |
|---|---|---|---|---|
| Mooney Viskosität (ML 1+4) | [ME] | 53523 | 91 | 98 |
| Mooney Anvulkanisation bei 130°C (t5) | sec | ASTM D 5289-95 | 1032 | 668 |
| Ausvulkanisation bei 170°C / t95 | s | 53529 | 1452 | 1534 |
| Shore A Härte bei 23°C | [Shore A] | 53505 | 67 | 66 |
| Modul 300 | MPa | 53504 | 16 | 16 |
| Bruchdehnung | % | 53504 | 329 | 308 |
| Zugfestigkeit | MPa | 53504 | 18 | 17 |
| Abrieb | mm³ | 53516 | 87 | 83 |
| Rollwiderstand (tan δ (60 °C) | - | | 0,152 | 0,135 |
| Nassrutschverhalten | - | | 0,383 | 0,421 |

Wie die Ergebnisse in Tabelle 2 zeigen, konnte überraschend gefunden werden, dass mit dem erfindungsgemäßen Additiv ein Verlustfaktor (tan δ bei 60°C) von mehr als 10 Prozent niedriger gemessen wurde gegenüber dem Referenzprodukt. Die mechanischen Eigenschaften wie Zugfestigkeit, Bruchdehnung und Modul 300 blieben dabei nahezu unverändert. Das getestete Vulkanisat zeigt ein gegenüber der Referenz verbessertes Nassrutschverhalten (Verlustfaktor tan δ bei 0°C > 0,40) und ebenfalls sehr vorteilhafte Abriebwerte (< 90 mm³).

### Prüfungen der Kautschukmischung und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird.

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten, der in Tabelle 1 genannten Kautschukmischungen, werden mittels Scherscheibenviskosimeter nach Mooney gemessen.

### Scorch-Verhalten (Anvulkanisationszeit t 5):

Des Weiteren kann mit der gleichen Prüfung wie oben beschrieben auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 2 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan δ indirekt über das Verhältnis zwischen Verlustmodul G" und Speichermodul G' bestimmt.

## Patentansprüche

1. Verbindungen der Formel
R⁴R⁵R⁶Si-X³-(-S_{y}-Y-)ₘ-S_{y}-X⁴-SiR⁷R⁸R⁹ (I)
worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 0 bis 20 steht
und
R⁴, R⁵, R⁶, R⁷, R⁸ und R⁹ unabhängig voneinander für -OH, -OMetall, Alkyl, Alkoxy, Phenyl, Phenoxy stehen
und
mindestens einer der Substituenten R⁴, R⁵, R⁶, R⁷, R⁸ und R⁹ für einen Rest der Formel
-O-R⁵R⁶Si-X^{3'}-(-S_{y}-Y-)ₘ-S_{y}-X⁴-SiR⁷R⁸R⁹ (Ia)
steht,
wobei die Substituenten und Indices der Formel (Ia) die oben für Formel (I) angegebene Bedeutung haben,
Metall für ein Metallion aus der Reihe der Alkali- und Erdalkalimetalle steht,
und gegebenenfalls die Reste der Formel (Ia) über eine oder mehrere -Si-O-Si-Einheiten mit weiteren Resten der Formel (Ia) verbunden sind.

2. Verbindungen gemäß Anspruch 1, **dadurch gekennzeichnet, dass** in Formel (I)
X³ und X⁴ unabhängig von einander für C₁-C₆-Alkylen stehen,
Y für einen geradkettigen, verzweigten oder cyclischen C₁-C₁₈-Alkylenrest steht der gegebenenfalls mit C₆-C₁₂-Aryl-, C₁-C₈-Alkoxy- oder Hydroxygruppen substituiert ist und der gegebenenfalls durch Sauerstoff-, Schwefel- oder Stickstoffatome oder durch C₆-C₁₂-Aryl unterbrochen ist, oder für eine zweiwertige, gegebenenfalls substituierte, gegebenenfalls Heteroatome enthaltende aliphatische, cycloaliphatische oder aromatische Gruppe steht,
y für eine ganze Zahl von 2 bis 4 steht,
m für eine ganze Zahl von 0 bis 6 steht
und
R⁴, R⁵, R⁶, R⁷, R⁸ und R⁹ unabhängig voneinander für -OH, -OMetall, oder C₁-C₈-Alkoxy stehen,
und mindestens einer der Substituenten R⁴, R⁵, R⁶, R⁷, R⁸ und R⁹ für einen Rest der Formel
-O-R⁵R⁶Si - X³-(-S_{y}-Y-)ₘ - S_{y} -X⁴ -SiR⁷R⁸R⁹ (Ia)
steht, wobei die Substituenten und Indices in Formel (Ia) die oben für Formel (I) angegebene Bedeutung haben,
Metall für ein Metallion ausgewählt aus der Reihe Na, K, Mg/2 und Ca/2 steht,
und gegebenenfalls die Reste der Formel (Ia) über eine oder mehrere -Si-O-Si-Einheiten mit weiteren Resten der Formel (Ia) verbunden sind.

3. Verbindung gemäß Ansprüchen 1 und 2, **dadurch gekennzeichnet, dass** in Formel (I) gemäß Anspruch 1
X³ und X⁴ unabhängig von einander für C₂-C₃-Alkylen stehen,
Y für einen Rest der Formel 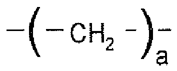 mitra=2-12
oder 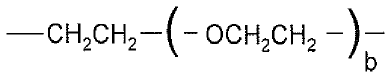 mit b = 1 - 4
steht,
y für 2, 3 oder 4 steht,
m für 0, 1, 2, 3, 4, 5 oder 6 steht,
R⁴, R⁵, R⁶, R⁷, R⁸ und R⁹ unabhängig voneinander für -OH, -ONa, -OK, -O-(Mg/2), -O-(Ca/2), Methoxy oder Ethoxy stehen, und
mindestens einer der Substituenten R⁴, R⁵, R⁶, R⁷, R⁸ und R⁹ für einen Rest der Formel
-O-R⁵R⁶Si - X³-(-S_{y}-Y-)ₘ - S_{y}-X⁴ -SiR⁷R⁸R⁹ (Ia)
steht, wobei die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formeln (Ia) verbunden sind.

4. Verbindungen gemäß wenigstens einem der Ansprüche 1 bis 3, **dadurch gekennzeichnet, dass** in Formel (I) gemäß Anspruch 1
X³ und X⁴ unabhängig von einander für C₂-C₃-Alkylen stehen,
Y für -(CH₂)-₆ steht
y für 2, 3 oder 4 steht,
m für 1 steht,
R⁴, R⁵, R⁶, R⁷, R⁸ und R⁹ unabhängig voneinander für -OH, -ONa, Methoxy oder Ethoxy stehen und
mindestens einer der Substituenten R⁴, R⁵, R⁶, R⁷, R⁸ und R⁹ für einen Rest der Formel
-O-R⁵R⁶Si - X³-(-S_{y}-Y-)ₘ - S_{y} -X⁴ -SiR⁷R⁸R⁹ (Ia)
steht, wobei die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind.

5. Verbindungen gemäß wenigstens einem der Ansprüche 1 bis 3, **dadurch gekennzeichnet, dass** in Formel (I) gemäß Anspruch 1
X³ und X⁴ unabhängig von einander für C₂-C₃-Alkylen stehen,
y für 2, 3 oder 4 steht,
m für 0 steht,
R⁴, R⁵, R⁶, R⁷, R⁸ und R⁹ unabhängig voneinander für -OH, -ONa, Methoxy oder Ethoxy stehen und
mindestens einer der Substituenten R⁴, R⁵, R⁶, R⁷, R⁸ und R⁹ für einen Rest der Formel
-O-R⁵R⁶Si - X³-(-S_{y}-Y-)ₘ - S_{y} -X⁴ -SiR⁷R⁸R⁹ (Ia)
steht,
wobei die Substituenten und Indices in Formel (Ia) die oben für Formel (I) genannten Bedeutungen haben,
und gegebenenfalls die Reste der Formel (Ia) über eine oder mehrere -Si-O-Si-Einheiten mit weiteren Resten der Formel (Ia) verbunden sind.

6. Verwendung von mindestens einer Verbindung gemäß wenigstens einem der Ansprüche 1 bis 5 als Additiv für Kunststoffe und/ oder Kautschuke.

7. Verwendung von mindestens einer Verbindung gemäß wenigstens einem der Ansprüche 1 bis 5 als Verstärkungsadditiv für kieselsänrehaltige Kautschuke.

8. Verwendung gemäß Anspruch 7, **dadurch gekennzeichnet, dass** wenigstens eine Verbindung der Formel (I) gemäß Anspruch 1 mit einer kieselsäurehaltigen Kautschukmischung vermischt wird.

9. Mischung, **dadurch gekennzeichnet, dass** sie wenigstens eine Verbindung der Formel (I) gemäß Anspruch 5 und wenigstens eine Verbindung der Formel (II)
R¹R²R³Si - X¹ - Sₓ -X²-SiR¹R²R³ (II)
worin
R¹, R² und R³ unabhängig voneinander für Alkoxy, vorzugsweise für C₁-C₆-Alkoxy, insbesondere für Methoxy oder Ethoxy stehen,
X¹ und X² unabhängig voneinander für Alkylen, vorzugsweise für C₁-C₆-Alkylen, insbesondere für C₂-C₃-Alkylen stehen,
und
x für eine ganze Zahl von 1 bis 6, vorzugsweise von 1 bis 4, insbesondere von 2 bis 4 steht,
enthält.

10. Mischung, **dadurch gekennzeichnet, dass** sie wenigstens eine Verbindung der Formel (I) gemäß wenigstens einem der Ansprüch 1 bis 5 und wenigstens eine Verbindung der Formel (IIa) 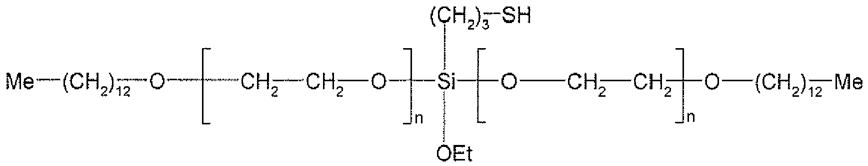 wobei
n für eine Zahl von 4 bis 6 steht, vorzugsweise für 5 steht
und/oder wenigstens eine Verbindung der Formel (IIb) 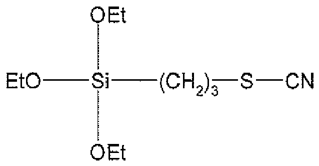 enthält.

11. Kieselsäurehaltige Kautschukmischung enthaltend als Additiv wenigstens eine Verbindung der Formel (I) gemäß wenigstens einem der Ansprüche 1 bis 5.

12. Kieselsäurehaltige Kautschukmischung enthaltend als Additiv wenigstens eine Mischung gemäß wenigstens einem der Ansprüche 9 und 10.

13. Kautschukmischung gemäß wenigstens einem der Ansprüche 11 und 12, **dadurch gekennzeichnet, dass** sie mindestens einen SBR-Kautschuk und mindestens einen BR-Kautschuk enthält.

14. Kautschukmischung gemäß wenigstens einem der Ansprüche 11 bis 13, **dadurch gekennzeichnet, dass** sie mindestens einen SBR-Kautschuk und mindestens einen BR-Kautschuk im Gewichts-Verhältnis SBR:BR= 60:40 bis 90:10 enthält.

15. Kautschukmischung gemäß wenigstens einem der Ansprüche 11 bis 14, **dadurch gekennzeichnet, dass** sie mindestens einen NR-Kautschuk enthält.

16. Verwendung einer Kautschukmischung gemäß wenigstens einem der Ansprüche 11 bis 15 zur Herstellung von Vulkanisaten und Kautschukformkörpern, insbesondere von Reifen und Reifenbauteilen.

17. Vulkanisate und Kautschukformkörper erhältlich durch Vulkanisation einer Kautschukmischung gemäß wenigstens einem der Ansprüche 11 bis 15.

18. Verfahren zur Herstellung einer Verbindung gemäß Anspruch 1, worin die Substituenten und der Index y die in Anspruch 1 angegebenen Bedeutungen haben, und der Index m für eine ganze Zahl von 1 bis 20 steht,
**dadurch gekennzeichnet, dass**
mindestens eine Verbindung der Formel (III)
R⁴R⁵R⁶Si - X³-SH (III)
worin
X³ für Alkylen steht,
R⁴, R⁵ und R⁶ unabhängig voneinander für -OH, -OMetall, Alkyl, Alkoxy, Phenyl, Phenoxy stehen,
wobei
Metall für ein Metallion aus der Reihe der Alkali- und Erdalkalimetalle steht,
und
mindestens eine Verbindung der Formel (IV)
R⁷R⁸R⁹Si - X⁴-SH (IV)
worin
R⁷, R⁸ und R⁹ unabhängig voneinander für -OH, -OMetall, Alkyl, Alkoxy, Phenyl, Phenoxy stehen, und wobei Metall für ein Metallion aus der Reihe der Alkali- und Erdalkalimetalle steht, und
X⁴ für Alkylen steht,
mit mindestens einer Verbindung der Formel (V)
Metall-O₃S-S - Y - S-SO₃-Metall V)
worin
Metall für ein Metallion aus der Reihe der Alkali- und Erdalkalimetalle steht,
und
Y für eine zweiwertige, gegebenenfalls substituierte, gegebenenfalls Heteroatome enthaltende aliphatische, cycloaliphatische oder aromatische Gruppe steht,
im wässrigen oder wässrig-organischen Medium umgesetzt wird.

19. Verfahren zur Herstellung von Verbindungen der Formel (I) gemäß Anspruch 1, worin die Substituenten und der Index y die in Anspruch 1 angegebene Bedeutung haben, und der Index m für 0 steht, **dadurch gekennzeichnet, dass** die entsprechenden unvernetzten Verbindung im wässrigen oder wässrig-organischen Medium miteinander umgesetzt werden.

## Claims

1. Compounds of the formula
R⁴R⁵R⁶Si - X³- (-S_{y}-Y-)ₘ - S_{y} -X⁴ -SiR⁷R⁸R⁹ (I)
in which
X³ and X⁴ independently of one another are alkylene,
Y is a divalent, optionally substituted, optionally heteroatom-containing aliphatic, cycloaliphatic or aromatic group,
y is an integer from 1 to 6,
m is an integer from 0 to 20
and
R⁴, R⁵, R⁶, R⁷, R⁸ and R⁹ independently of one another are -OH, -Ometal, alkyl, alkoxy, phenyl or phenoxy
and
at least one of the substituents R⁴, R⁵, R⁶, R⁷, R⁸ and R⁹ is a radical of the formula
-O-R⁵R⁶Si - X^{3'}-(-S_{y-}Y-)ₘ- S_{y} -X⁴ -SiR⁷R⁸R⁹ (Ia)
where the substituents and indices in the formula (Ia) have the definition stated above for formula (I),
metal is a metal ion from the series of the alkali metals and alkaline earth metals,
and optionally the radicals of the formula (Ia) are joined via one or more -Si-O-Si- units to further radicals of the formula (Ia).

2. Compounds according to Claim 1, **characterized in that** in formula (I)
x³ and X⁴ independently of one another are C₁-C₆-alkylene,
Y is a straight-chain, branched or cyclic C₁-C₁₈-alkylene radical which is optionally substituted by C₆-C₁₂-aryl, C₁-C₈-alkoxy or hydroxyl groups and which is optionally interrupted by oxygen, sulphur or nitrogen atoms or by C₆-C₁₂-aryl, or is a divalent, optionally substituted, optionally heteroatom-containing aliphatic, cycloaliphatic or aromatic group,
y is an integer from 2 to 4,
m is an integer from 0 to 6
and
R⁴, R⁵, R⁶, R⁷, R⁸ and R⁹ independently of one another are -OH, -Ometal, or C₁-C₈-alkoxy,
and at least one of the substituents R⁴, R⁵, R⁶, R⁷, R⁸ and R⁹ is a radical of the formula
-O-R⁵R⁶Si - X³-(S_{y}-Y-)ₘ S_{y} -X⁴ -SiR⁷R⁸R⁹ (Ia)
where the substituents and indices in formula (Ia) have the definition stated above for formula (I),
metal is a metal ion selected from the series Na, K, Mg/2 and Ca/2,
and optionally the radicals of the formula (Ia) are joined via one or more -Si-O-Si- units to further radicals of the formula (Ia).

3. Compound according to Claims 1 and 2, **characterized in that** in formula (I) according to Claim 1
X³ and X⁴ independently of one another are C₂-C₃-alkylene,
Y is a radical of the formula 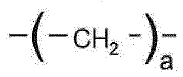 where a = 2 -12
or 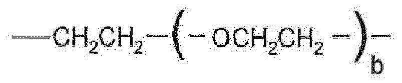 where b = 1 - 4,
y is 2, 3 or 4,
m is 0, 1, 2, 3, 4, 5 or 6, R⁴, R⁵, R⁶, R⁷, R⁸ and R⁹ independently of one another are -OH, -ONa, -OK, -O-(Mg/2), -O-(Ca/2), methoxy or ethoxy, and
at least one of the substituents R⁴, R⁵, R⁵, R⁷, R⁸ and R⁹ is a radical of the formula
-O-R⁵R⁶Si - X³-(S_{y}-Y-)ₘ - S_{y} -X⁴ SiR⁷R⁸R⁹ (Ia)
where the substituents and indices in formula (Ia) have the definitions stated above for formula (I),
and optionally the radicals of the formula (Ia) are joined via one or more -Si-O-Si- units to further radicals of the formula (Ia).

4. Compounds according to at least one of Claims 1 to 3, **characterized in that** in formula (I) according to Claim 1
X³ and X⁴ independently of one another are C₂-C₃-alkylene,
Y is - (CH₂) -₆,
y is 2, 3 or 4,
m is 1,
R⁴, R⁵, R⁶, R⁷, R⁸ and R⁹ independently of one another are -OH, -ONa, methoxy or ethoxy and
at least one of the substituents R⁴, R⁵, R⁶, R⁷, R⁸ and R⁹ is a radical of the formula
-O-R⁵R⁶Si - X³- (-S_{y}-Y-)ₘ - Sy -X⁴ -SiR⁷R⁸R⁹ (Ia)
where the substituents and indices in formula (Ia) have the definitions stated above for formula (I),
and optionally the radicals of the formula (Ia) are joined via one or more -Si-O-Si- units to further radicals of the formula (Ia).

5. Compounds according to at least one of Claims 1 to 3, **characterized in that** in formula (I) according to Claim 1
X³ and X⁴ independently of one another are C₂-C₃-alkylene,
y is 2, 3 or 4,
m is 0,
R⁴, R⁵, R⁶, R⁷, R⁸ and R⁹ independently of one another are -OH, -ONa, methoxy or ethoxy and
at least one of the substituents R⁴, R⁵, R⁶, R⁷, R⁸ and R⁹ is a radical of the formula
-O-R⁵R⁶Si - X³-(-S_{y}-Y-)ₘ - S_{y} -X⁴ -SiR⁷R⁸R⁹ (Ia)
where the substituents and indices in formula (Ia) have the definitions stated above for formula (I),
and optionally the radicals of the formula (Ia) are joined via one or more -Si-O-Si- units to further radicals of the formula (Ia).

6. Use of at least one compound according to at least one of Claims 1 to 5 as an additive for plastics and/or rubbers.

7. Use of at least one compound according to at least one of Claims 1 to 5 as a reinforcing additive for silica-containing rubbers.

8. Use according to Claim 7, **characterized in that** at least one compound of the formula (I) according to Claim 1 is mixed with a silica-containing rubber mixture.

9. Mixture **characterized in that** it comprises at least one compound of the formula (I) according to Claim 5 and at least one compound of the formula (II)
R¹R²R³Si - X¹ - Sₓ -X² -SiR¹R²R³ (II)
in which
R¹, R² and R³ independently of one another are alkoxy, preferably C₁-C₆-alkoxy, more particularly methoxy or ethoxy,
X¹ and X² independently of one another are alkylene, preferably C₁-C₆-alkylene, more particularly C₂-C₃-alkylene,
and
x is an integer from 1 to 6, preferably from 1 to 4, more preferably from 2 to 4.

10. Mixture **characterized in that** it comprises at least one compound of the formula (I) according to at least one of Claims 1 to 5 and at least one compound of the formula (IIa) 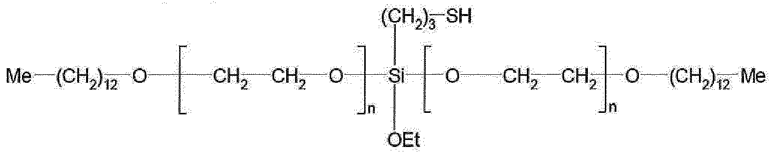 where
n is a number from 4 to 6, preferably 5
and/or at least one compound of the formula (IIb)

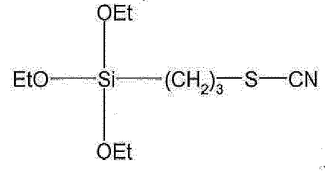

11. Silica-containing rubber mixture comprising as additive at least one compound of the formula (I) according to at least one of Claims 1 to 5.

12. Silica-containing rubber mixture comprising as additive at least one mixture according to at least one of Claims 9 and 10.

13. Rubber mixture according to at least one of Claims 11 and 12, **characterized in that** it comprises at least one SBR rubber and at least one BR rubber.

14. Rubber mixture according to at least one of Claims 11 to 13, **characterized in that** it comprises at least one SBR rubber and at least one BR rubber in an SBR:BR weight ratio of 60:40 to 90:10.

15. Rubber mixture according to at least one of Claims 11 to 14, **characterized in that** it comprises at least one NR rubber.

16. Use of a rubber mixture according to at least one of Claims 11 to 15 for producing vulcanizates and rubber mouldings, more particularly tyres and tyre components.

17. Vulcanizates and rubber mouldings obtainable by vulcanizing a rubber mixture according to at least one of Claims 11 to 15.

18. Process for preparing a compound according to Claim 1, in which the substituents and the index y have the definitions stated in Claim 1, and the index m is an integer from 1 to 20,
**characterized in that**
at least one compound of the formula (III)
R⁴R⁵R⁶Si - X³-SH (III)
in which
X³ is alkylene,
R⁴, R⁵ and R⁶ independently of one another are -OH, - Ometal, alkyl, alkoxy, phenyl or phenoxy,
where
metal is a metal ion from the series of the alkali metals and alkaline earth metals,
and
at least one compound of the formula (IV)
R⁷R⁸R⁹Si - X⁴-SH (IV)
in which
R⁷, R⁸ and R⁹ independently of one another are -OH, - Ometal, alkyl, alkoxy, phenyl or phenoxy, and where metal is a metal ion from the series of the alkali metals and alkaline earth metals, and
X⁴ is alkylene,
is reacted with at least one compound of the formula (V)
metal-O₃S-S - Y - S-SO₃-metal (V)
in which
metal is a metal ion from the series of the alkali metals and alkaline earth metals,
and
Y is a divalent, optionally substituted, optionally heteroatom-containing aliphatic, cycloaliphatic or aromatic group,
in an aqueous or aqueous-organic medium.

19. Process for preparing compounds of the formula (I) according to Claim 1, in which the substituents and the index y have the definition stated in Claim 1, and the index m is 0, **characterized in that** the corresponding non-crosslinked compounds are reacted with one another in an aqueous or aqueous-organic medium.

## Revendications

1. Composés de formule
R⁴R⁵R⁶Si-X³-(-S_{y}-Y-)ₘ-S_{y}-X⁴-SiR⁷R⁸R⁹ (I)
dans laquelle
X³ et X⁴ représentent indépendamment l'un de l'autre alkylène,
Y représente un groupe aliphatique, cycloaliphatique ou aromatique bivalent, éventuellement substitué, contenant éventuellement des hétéroatomes,
y représente un nombre entier de 1 à 6,
m représente un nombre entier de 0 à 20,
et
R⁴, R⁵, R⁶, R⁷, R⁸ et R⁹ représentent indépendamment les uns des autres -OH, -O-métal, alkyle, alcoxy, phényle, phénoxy,
et
au moins un des substituants R⁴, R⁵, R⁶, R⁷, R⁸ et R⁹ représente un radical de formule
-O-R⁵R⁶Si-X³- (-S_{y}-Y-)ₘ-S_{y}-X⁴-SiR⁷R⁸R⁹ (Ia),
les substituants et les indices de la formule (Ia) ayant la signification indiquée précédemment pour la formule (I),
métal représentant un ion métallique de la série des métaux alcalins et alcalino-terreux,
et les radicaux de formule (Ia) étant éventuellement reliés par une ou plusieurs unités -Si-O-Si avec d'autres radicaux de formule (Ia).

2. Composés selon la revendication 1, **caractérisés en ce que**, dans la formule (I),
X³ et X⁴ représentent indépendamment l'un de l'autre alkylène en C₁-C₆,
Y représente un radical alkylène en C₁-C₁₈ linéaire, ramifié ou cyclique, qui est éventuellement substitué avec des groupes aryle en C₆-C₁₂, alcoxy en C₁-C₈ ou hydroxy, et qui est éventuellement interrompu par des atomes d'oxygène, de soufre ou d'azote ou par aryle en C₆-C₁₂, ou un groupe aliphatique, cycloaliphatique ou aromatique bivalent, éventuellement substitué, contenant éventuellement des hétéroatomes,
y représente un nombre entier de 2 à 4,
m représente un nombre entier de 0 à 6,
et
R⁴, R⁵, R⁶, R⁷, R⁸ et R⁹ représentent indépendamment les uns des autres -OH, -O-métal ou alcoxy en C₁-C₈,
et au moins un des substituants R⁴, R⁵, R⁶, R⁷, R⁸ et R⁹ représente un radical de formule
-O-R⁵R⁶Si-X³-(-S_{y}-Y-)ₘ-S_{y}-X⁴-SiR⁷R⁸R⁹ (Ia),
les substituants et les indices de la formule (Ia) ayant la signification indiquée précédemment pour la formule (I),
métal représentant un ion métallique de la série constituée par Na, K, Mg/2 et Ca/2,
et les radicaux de formule (Ia) étant éventuellement reliés par une ou plusieurs unités -Si-O-Si avec d'autres radicaux de formule (Ia).

3. Composé selon les revendications 1 et 2, **caractérisé en ce que**, dans la formule (I) selon la revendication 1,
X³ et X⁴ représentent indépendamment l'un de l'autre alkylène en C₂-C₃,
Y représente un radical de formule 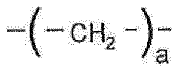 avec a = 2 à 12,
ou 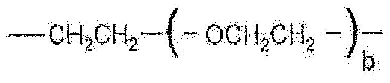 avec b = 1 à 4,
y représente 2, 3 ou 4,
m représente 0, 1, 2, 3, 4, 5 ou 6,
R⁴, R⁵, R⁶, R⁷, R⁸ et R⁹ représentent indépendamment les uns des autres -OH, -ONa, -OK, -O-(Mg/2), -O-(Ca/2), méthoxy ou éthoxy, et
au moins un des substituants R⁴ , R⁵, R⁶, R⁷, R⁸ et R⁹ représente un radical de formule
-O-R⁵R⁶Si-X³- (-S_{y}-Y-)ₘ-S_{y}-X⁴-SiR⁷R⁸R⁹ (Ia),
les substituants et les indices de la formule (Ia) ayant les significations indiquées précédemment pour la formule (I),
et les radicaux de formule (Ia) étant éventuellement reliés par une ou plusieurs unités -Si-O-Si avec d'autres radicaux de formule (Ia).

4. Composés selon au moins l'une quelconque des revendications 1 à 3, **caractérisés en ce que**, dans la formule (I) selon la revendication 1,
X³ et X⁴ représentent indépendamment l'un de l'autre alkylène en C₂-C₃,
Y représente -(CH₂)₆-,
y représente 2, 3 ou 4,
m représente 1,
R⁴, R⁵, R⁶, R⁷, R⁸ et R⁹ représentent indépendamment les uns des autres -OH, -ONa, méthoxy ou éthoxy, et
au moins un des substituants R⁴, R⁵, R⁶, R⁷, R⁸ et R⁹ représente un radical de formule
-O-R⁵R⁶Si-X³- (-S_{y}-Y-)ₘ -S_{y}-X⁴-SiR⁷R⁸R⁹ (Ia),
les substituants et les indices de la formule (Ia) ayant les significations indiquées précédemment pour la formule (I),
et les radicaux de formule (Ia) étant éventuellement reliés par une ou plusieurs unités -Si-O-Si avec d'autres radicaux de formule (Ia).

5. Composés selon au moins l'une quelconque des revendications 1 à 3, **caractérisés en ce que**, dans la formule (I) selon la revendication 1,
X³ et X⁴ représentent indépendamment l'un de l'autre alkylène en C₂-C₃,
y représente 2, 3 ou 4,
m représente 0,
R⁴, R⁵, R⁶, R⁷, R⁸ et R⁹ représentent indépendamment les uns des autres -OH, -ONa, méthoxy ou éthoxy, et
au moins un des substituants R⁴, R⁵, R⁶, R⁷, R⁸ et R⁹ représente un radical de formule
-O-R⁵R⁶Si-X³-(-S_{y}-Y-)ₘ-S_{y}-X⁴-SiR⁷R⁸R⁹ (Ia),
les substituants et les indices de la formule (Ia) ayant les significations indiquées précédemment pour la formule (I),
et les radicaux de formule (Ia) étant éventuellement reliés par une ou plusieurs unités -Si-O-Si avec d'autres radicaux de formule (Ia).

6. Utilisation d'au moins un composé selon au moins l'une quelconque des revendications 1 à 5 en tant qu'additif pour des plastiques et/ou des caoutchoucs.

7. Utilisation d'au moins un composé selon au moins l'une quelconque des revendications 1 à 5 en tant qu'additif renforçant pour des caoutchoucs contenant de la silice.

8. Utilisation selon la revendication 7, **caractérisée en ce qu'**au moins un composé de formule (I) selon la revendication 1 est mélangé avec un mélange de caoutchouc contenant de la silice.

9. Mélange, **caractérisé en ce qu'**il contient au moins un composé de formule (I) selon la revendication 5 et au moins un composé de formule (II)
R¹R²R³Si-X¹-Sₓ-X²-SiR¹R²R³ (II)
dans laquelle
R¹, R² et R³ représentent indépendamment les uns des autres alcoxy, de préférence alcoxy en C₁-C₆, notamment méthoxy ou éthoxy,
X¹ et X² représentent indépendamment l'un de l'autre alkylène, de préférence alkylène en C₁-C₆, notamment alkylène en C₂-C₃,
et
x représente un nombre entier de 1 à 6, de préférence de 1 à 4, notamment de 2 à 4.

10. Mélange, **caractérisé en ce qu'**il contient au moins un composé de formule (I) selon au moins l'une quelconque des revendications 1 à 5 et au moins un composé de formule (IIa) 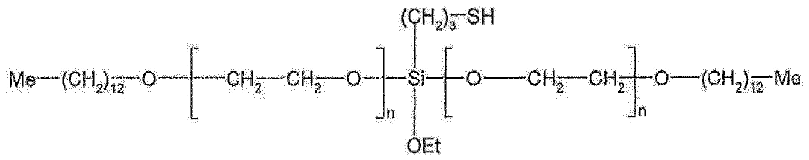 dans laquelle
n représente un nombre de 4 à 6, de préférence 5,
et/ou au moins un composé de formule (IIb)

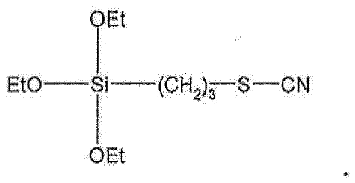

11. Mélange de caoutchouc contenant de la silice, contenant en tant qu'additif au moins un composé de formule (I) selon au moins l'une quelconque des revendications 1 à 5.

12. Mélange de caoutchouc contenant de la silice, contenant en tant qu'additif au moins un mélange selon au moins l'une quelconque des revendications 9 et 10.

13. Mélange de caoutchouc selon au moins l'une quelconque des revendications 11 et 12, **caractérisé en ce qu'**il contient au moins un caoutchouc SBR et au moins un caoutchouc BR.

14. Mélange de caoutchouc selon au moins l'une quelconque des revendications 11 à 13, **caractérisé en ce qu'**il contient au moins un caoutchouc SBR et au moins un caoutchouc BR en un rapport en poids SBR :BR = 60:40 à 90:10.

15. Mélange de caoutchouc selon au moins l'une quelconque des revendications 11 à 14, **caractérisé en ce qu'**il contient au moins un caoutchouc NR.

16. Utilisation d'un mélange de caoutchouc selon au moins l'une quelconque des revendications 11 à 15, pour la fabrication de vulcanisats et de corps moulés en caoutchouc, notamment de pneus et de composants de pneus.

17. Vulcanisats et corps moulés en caoutchouc pouvant être obtenus par vulcanisation d'un mélange de caoutchouc selon au moins l'une quelconque des revendications 11 à 15.

18. Procédé de fabrication d'un composé selon la revendication 1, dans lequel les substituants et l'indice y ont les significations indiquées dans la revendication 1, et l'indice m représente un nombre entier de 1 à 20, **caractérisé en ce qu'**au moins un composé de formule (III)
R⁴R⁵R⁶Si-X³-SH (III)
dans laquelle
X³ représente alkylène,
R⁴, R⁵ et R⁶ représentent indépendamment les uns des autres -OH, -O-métal, alkyle, alcoxy, phényle, phénoxy, métal représentant un ion métallique de la série des métaux alcalins et alcalino-terreux,
et
au moins un composé de formule (IV)
R⁷R⁸R⁹Si-X⁴-SH (IV)
dans laquelle
R⁷, R⁸ et R⁹ représentent indépendamment les uns des autres -OH, -O-métal, allyle, alcoxy, phényle, phénoxy ; métal représentant un ion métallique de la série des métaux alcalins et alcalino-terreux, et
X⁴ représente alkylène,
sont mis en réaction avec au moins un composé de formule (V)
métal-O₃S-S-Y-S-SO₃-métal (V)
dans laquelle
métal représente un ion métallique de la série des métaux alcalins et alcalino-terreux,
et
Y représente un groupe aliphatique, cycloaliphatique ou aromatique bivalent, éventuellement substitué, contenant éventuellement des hétéroatomes,
dans un milieu aqueux ou aqueux organique.

19. Procédé de fabrication de composés de formule (I) selon la revendication 1, dans lesquels les substituants et l'indice y ont la signification indiquée dans la revendication 1, et l'indice m représente 0, **caractérisé en ce que** les composés non réticulés correspondants sont mis en réaction les uns avec les autres dans un milieu aqueux ou aqueux organique.
